# EUROPEAN PATENT SPECIFICATION

(11) **EP 2 548 776 B1**
(45) Date of publication and mention of the grant of the patent: **27.05.2015**
(21) Application number: 12173079.0
(22) Date of filing: 22.06.2012
(51) Int. Cl.: B60T 1/10, B60T 7/04, B60T 8/32, B60T 11/20, B60T 13/74, B60T 8/40, B60T 8/26, B60T 8/44

(54) **Stroke simulator, master cylinder having stroke simulator and brake system using master cylinder**
Hubsimulator, Hauptbremszylinder mit Hubsimulator und Bremssystem, das den Hauptbremszylinder verwendet
Simulateur de course, maître-cylindre muni du simulateur de course et système de freinage à l'aide du maître-cylindre.

(30) Priority: 19.07.2011 JP 2011157776
(43) Date of publication of application: 23.01.2013
(73) Proprietor: Bosch Corporation, Tokyo 150-8360 (JP)
(72) Inventor: Kobayashi, Isao, Saitama-ken 355-0813 (JP)
(74) Representative: DREISS Patentanwälte PartG mbB

(56) References cited:
- EP-A1- 1 600 347
- DE-A1- 3 830 836
- DE-A1- 4 413 579
- DE-A1- 19 651 153
- DE-A1- 19 838 037
- DE-A1-102005 049 199
- DE-A1-102007 030 441
- FR-A1- 2 221 316
- US-A1- 2002 140 286
- US-A1- 2009 179 485

## Description

### BACKGROUND OF THE INVENTION

### FIELD OF THE INVENTION

The present invention relates to a technical field of a stroke simulator that generates a reaction force corresponding to a stroke of an input shaft that is used in a brake system etc., a technical field of a master cylinder having the stroke simulator, and a technical field of a brake system using the master cylinder. Note that, in the description of the specification of the invention, the front-rear relationship is defined such that the direction in which the input shaft moves when a brake pedal is depressed is the "front" and the direction in which the input shaft returns when the depression of the brake pedal is released is the "rear".

### DESCRIPTION OF THE RELATED ART

In automobiles such as passenger cars, hybrid vehicles and electric vehicles are being increasingly developed.

EP 1 600 347 Al discloses a brake action stroke simulator and a master cylinder for a vehicle brake.

DE 19838037 Al discloses a brake pedal stroke simulator having repulsing magnets.

DE 102007030441 Al discloses a hydraulic brake system for a vehicle having a brake pedal.

DE 38 30 836 Al discloses a force simulation in a servo control system having a cavity with two electrodes and filled with a electroheological fluid.

Along with this, in automobile brake systems, various types of cooperative regenerative braking systems are being developed, in which a regenerative brake and a friction brake are used cooperatively. The regenerative cooperative brake system detects a depression stroke of a brake pedal. Based on the detected stroke, a control portion (an Electric Control Unit (ECU)) calculates a braking force by the regenerative brake and a braking force by the friction brake, and the automobile is braked based on the calculated braking forces.

In this type of cooperative regenerative braking system, the control portion determines a braking force based on the depression stroke of the brake pedal. Therefore, a reaction force corresponding to the depression stroke of the brake pedal is not transmitted to a driver. To address this, a master cylinder having a pedal feel simulator portion is proposed so that the driver can recognize the reaction force that corresponds to the depression stroke of the brake pedal (refer to Japanese Patent No. 4510388, for example).

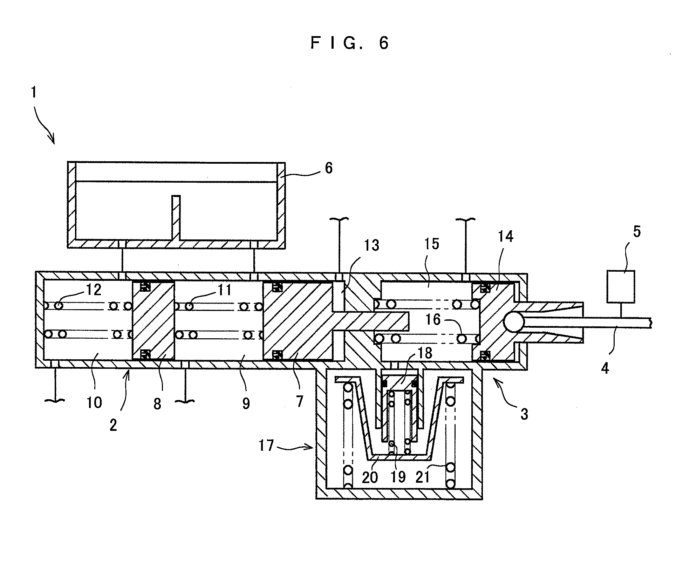

FIG. 6 is a diagram that schematically shows the master cylinder having the pedal feel simulator portion described in Japanese Patent No. 4510388. In FIG. 6, a reference numeral 1 denotes a master cylinder, a reference numeral 2 denotes a tandem master cylinder portion that generates a braking liquid pressure of a friction brake, a reference numeral 3 denotes a pedal feel simulator portion (a stroke simulator) that is provided integrally with the tandem master cylinder portion 2, a reference numeral 4 denotes an input shaft that performs a stroke in accordance with depression of a brake pedal (not shown in FIG. 6), a reference numeral 5 denotes a stroke sensor that detects the stroke of the input shaft 4, and a reference numeral 6 denotes a reservoir tank that holds brake fluid.

In a similar manner to a known tandem master cylinder, the tandem master cylinder portion 2 includes a primary piston 7, a secondary piston 8, a primary hydraulic chamber 9 that is defined by the primary piston 7 and the secondary piston 8, a secondary hydraulic chamber 10 that is defined by the secondary piston 8, a primary spring 11 that constantly urges the primary piston 7 toward an inoperative position, and a secondary spring 12 that constantly urges the secondary piston 8 toward an inoperative position. The primary hydraulic chamber 9 is constantly and communicatively connected to a brake cylinder (not shown in FIG. 6) of one of brake lines. At the same time, the primary hydraulic chamber 9 is constantly and communicatively connected to the reservoir tank 6 in the inoperative position of the primary piston 7 (shown in FIG. 6). When the primary piston 7 moves forward, the primary hydraulic chamber 9 is disconnected from the reservoir tank 6 and a braking liquid pressure is generated in the primary hydraulic chamber 9. The secondary hydraulic chamber 10 is constantly and communicatively connected to a brake cylinder (not shown in FIG. 6) of the other of the brake lines. At the same time, the secondary hydraulic chamber 10 is constantly and communicatively connected to the reservoir tank 6 in the inoperative position of the secondary piston 8 (shown in FIG. 6). When the secondary piston 8 moves forward, the secondary hydraulic chamber 10 is disconnected from the reservoir tank 6 and a braking liquid pressure is generated in the secondary hydraulic chamber 10.

Further, the tandem master cylinder portion 2 includes a power chamber 13 between the primary piston 7 and a cylinder wall. The power chamber 13 is supplied with hydraulic fluid from a power source (not shown in FIG. 6) when the brake is operated. In this case, the hydraulic fluid is supplied such that a hydraulic pressure in the power chamber 13 is a hydraulic pressure corresponding to the braking force by the friction brake that is calculated by the control portion.

The pedal feel simulator portion 3 includes: a simulator operation piston 14 (that corresponds to a simulator operation member of the invention) that is operated by the input shaft 4; a simulator hydraulic fluid chamber 15, in which a simulator hydraulic fluid pressure is generated by the operation of the simulator operation piston 14; a simulator operation piston return spring 16 that is formed by a coil spring that constantly urges the simulator operation piston 14 toward an inoperative position; and a pedal feel simulator cartridge 17. Further, the pedal feel simulator cartridge 17 includes: a first reaction force simulator piston 18 (that corresponds to a reaction force simulator member of the invention), to which the simulator hydraulic fluid pressure of the simulator hydraulic fluid chamber 15 is applied; a first reaction force simulator spring 19 (that corresponds to the reaction force simulator member of the invention) that constantly urges the first reaction force simulator piston 18 toward an inoperative position; a second reaction force simulator piston 20 (that corresponds to the reaction force simulator member of the invention) that supports the first reaction force simulator spring 19; and a second reaction force simulator spring 21 (that corresponds to the reaction force simulator member of the invention) that constantly urges the second reaction force simulator piston 20 toward an inoperative position.

In this pedal feel simulator portion 3, during an inoperative time period in which the brake pedal is not depressed, the simulator operation piston 14 is in the inoperative position shown in FIG. 6. In this state, the simulator hydraulic fluid chamber 15 is communicatively connected to the reservoir tank 6 and the simulator hydraulic fluid pressure is not generated in the simulator hydraulic fluid chamber 15. The pressure in this chamber is equal to an atmospheric pressure. Therefore, the first reaction force simulator piston 18 and the second reaction force simulator piston 20 are respectively in the inoperative positions shown in FIG. 6.

When the brake pedal is depressed, the input shaft 4 moves forward (moves to the left in FIG. 6). As a result, the simulator operation piston 14 moves forward (operates) while elastically deflecting the simulator operation piston return spring 16. When the simulator hydraulic fluid chamber 15 is disconnected from the reservoir tank 6 by the operation of the simulator operation piston 14, the simulator hydraulic fluid pressure is generated in the simulator hydraulic fluid chamber 15. The simulator hydraulic fluid pressure acts on the first reaction force simulator piston 18. When the simulator hydraulic fluid pressure increases and reaches a predetermined hydraulic pressure, the first reaction force simulator piston 18 moves (operates) in the downward direction as shown in FIG. 6 while pressing and elastically deflecting the first reaction force simulator spring 19 by the simulator hydraulic fluid pressure. At the same time, the second reaction force simulator piston 20 moves (operates) in the downward direction as shown in FIG. 6 while deflecting the second reaction force simulator spring 21 by the pressing force of the first reaction force simulator piston 18. As a result of this, the first and second reaction force simulator springs 19 and 21 apply forces that correspond to their deflection amounts to the first reaction force simulator piston 18, as reaction forces.

Then, the first reaction force simulator piston 18 presses the hydraulic fluid in the simulator hydraulic fluid chamber 15 based on the reaction force from the first reaction force simulator spring 19. As a result of this, the reaction force that acts on the first reaction force simulator piston 18 is converted to the simulator hydraulic fluid pressure that corresponds to the depression stroke of the brake pedal inside the simulator hydraulic fluid chamber 15. Further, the reaction force converted to the simulator hydraulic fluid pressure is transmitted to the input shaft 4 via the simulator operation piston 14. Further, the reaction force is transmitted from the input shaft 4 to the brake pedal. Thus, the driver recognizes, from the brake pedal, the reaction force that corresponds to the depression stroke of the brake pedal.

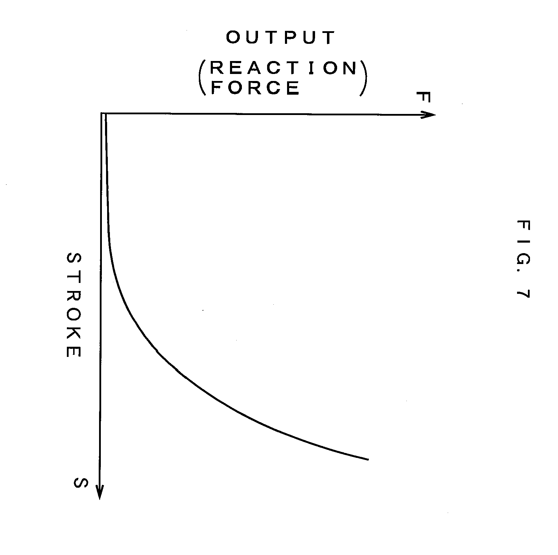

A characteristic diagram shown in FIG. 7 is a pedal feel characteristic diagram in the pedal feel simulator portion 3 structured in this manner (namely, a characteristic diagram of an output (a reaction force) F with respect to a stroke S of the input shaft 4). More specifically, the pedal feel characteristic diagram shows a characteristic curve that is curved such that the output (the reaction force) is relatively small with respect to an increase in the stroke of the input shaft 4 during an initial period of operation of the pedal feel simulator portion 3 and, when the stroke of the input shaft 4 increases to a predetermined amount, the output (the reaction force) is relatively large with respect to an increase in the stroke.

Further, Japanese Patent No. 4510388 describes another example of the pedal feel simulator cartridge 17, which includes a coil spring and an elastically deformable spacer member. The elastically deformable spacer member is coaxially disposed on the coil spring and is formed by winding an elastic wire rod in a spiral manner. The coil spring and the spacer member are elastically deformed by an adjustment member and deformation forces of the coil spring and the spacer member are changed to obtain various characteristic curves. A cross-sectional area (a thickness) of the wire rod of the spiral spacer member is continuously changed.

On the other hand, in the master cylinder 1, the tandem master cylinder portion 2 and the pedal feel simulator portion 3 are both in an inoperative condition shown in FIG. 6 during the inoperative time period in which the brake pedal is not depressed. More specifically, the hydraulic fluid is not supplied from the power source to the power chamber 13, and the primary piston 7 and the secondary piston 8 are both in the inoperative positions shown in FIG. 6. Therefore, the primary hydraulic chamber 9 and the secondary hydraulic chamber 10 are both communicatively connected to the reservoir tank 6, and the braking liquid pressure is not generated in the primary hydraulic chamber 9 and the secondary hydraulic chamber 10. Further, the simulator hydraulic fluid chamber 15 is communicatively connected to the reservoir tank 6 and the simulator hydraulic fluid pressure is not generated in the simulator hydraulic fluid chamber 15.

When the brake pedal is depressed, the input shaft 4 performs a forward stroke. The stroke of the input shaft 4 is detected by the stroke sensor 5. The control portion (not shown in the drawings) controls drive of the power source based on the stroke of the input shaft 4 (namely, the depression stroke of the brake pedal) detected by the stroke sensor 5. By doing this, the hydraulic fluid is supplied from the power source to the power chamber 13 and the primary piston 7 and the secondary piston 8 move forward. In response to this, the primary hydraulic chamber 9 and the secondary hydraulic chamber 10 are both disconnected from the reservoir tank 6, and a braking liquid pressure is generated in the primary hydraulic chamber 9 and in the secondary hydraulic chamber 10. The braking liquid pressures of the primary and secondary hydraulic chambers 9 and 10 are respectively supplied to corresponding brake cylinders of the two brake lines, and corresponding wheels of the automobile are braked.

When the hydraulic fluid pressure in the power chamber 13 reaches a hydraulic pressure that corresponds to the depression stroke of the brake pedal, the control portion stops supply of the hydraulic fluid from the power source. In response to this, the primary piston 7 and the secondary piston 8 both stop, and the braking liquid pressure in the primary hydraulic chamber 9 and the braking liquid pressure in the secondary hydraulic chamber 10 both adjust to a hydraulic pressure that corresponds to the depression stroke of the brake pedal. In other words, braking is applied to the wheels with a braking force that corresponds to the depression stroke of the brake pedal.

At this time, as described above, the pedal feel simulator portion 3 transmits, to the brake pedal, the reaction force that corresponds to the depression stroke of the brake pedal. Therefore, the driver recognizes the reaction force and perceives that braking is applied to the wheels with the braking force that corresponds to the depression stroke of the brake pedal.

When the brake pedal is released, the input shaft 4 performs a backward stroke (moves toward an inoperative position) and the stroke of the input shaft 4 is detected by the stroke sensor 5. The control portion controls a control valve (not shown in the drawings) based on the stroke detected by the stroke sensor 5 so that the hydraulic fluid in the power chamber 13 is discharged to the reservoir tank 6. As a result of this, the hydraulic pressure in the power chamber 13 decreases and the primary piston 7 and the secondary piston 8 respectively move backward due to the urging force of the primary spring 11 and the urging force of the secondary spring 12. When the hydraulic pressure in the power chamber 13 becomes equal to the atmospheric pressure, the primary piston 7 and the secondary piston 8 are both in the inoperative positions shown in FIG. 6, and the braking of the wheels is released.

Meanwhile, as the input shaft 4 performs the backward stroke, the simulator operation piston 14 moves backward due to an urging force of the simulator operation piston return spring 16. When the simulator operation piston 14 is in the vicinity of the inoperative position, the simulator hydraulic fluid chamber 15 is communicatively connected to the reservoir tank 6 and the simulator hydraulic fluid pressure in the simulator hydraulic fluid chamber 15 decreases. In a state in which the simulator operation piston 14 is in the inoperative position shown in FIG. 6, the hydraulic pressure in the simulator hydraulic fluid chamber 15 is equal to the atmospheric pressure. As a result of this, the first reaction force simulator piston 18 and the second reaction force simulator piston 20 are both in the inoperative positions shown in FIG. 6. Note that the terms and reference numerals used for the respective structural elements are not the same terms and reference numerals as those described in Japanese Patent No. 4510388.

### SUMMARY OF THE INVENTION

However, in the above-described pedal feel simulator portion 3, due to the forward stroke of the input shaft 4, the simulator operation piston 14 performs a forward stroke while elastically deflecting the simulator operation piston return spring 16, and at the same time, the first and second reaction force simulator pistons 18 and 20 perform a stroke while elastically deflecting the first and second reaction force simulator springs 19 and 21, respectively. For this reason, a relatively high rebound resistance is caused by the spring force of each of the springs, and it is difficult to obtain a good operation feeling. Therefore, there is a room to further improve the operation feeling by suppressing the rebound resistance caused by the spring force of the springs.

In addition, the coil spring and the spiral spacer member, which are disposed in the pedal feel simulator cartridge 17 of the pedal feel simulator portion 3, are disposed on the same axis. Therefore, the structure is complicated, assembly is not easy, and the wire rod having a special shape is used for the spiral spacer member, thus resulting in high costs.

Further, in the master cylinder 1 having the above-described pedal feel simulator portion 3 and in the brake system using the master cylinder 1, the hysteresis (not shown in the drawings) of the input/output (reaction force) characteristics of the master cylinder 1 is constant or almost constant, regardless of the positions of the first and second reaction force simulator pistons 18 and 20 of the pedal feel simulator portion 3. Therefore, it is difficult to obtain a stable output (namely, a braking force) in accordance with an operation condition of the master cylinder 1 (namely, an operation condition of the brake), and good control performance of an output (namely, a braking force) is not obtained. Therefore, there is room to further improve the control performance of the output (namely, the braking force) in the master cylinder 1 and in the brake system described in Japanese Patent No. 4510388.

Moreover, as described above, it is difficult for the pedal feel simulator portion 3 to obtain a good operation feeling, due to the rebound resistance caused by the spring force of each of the springs. Therefore, in the master cylinder 1 and in the brake system described in Japanese Patent No. 4510388, it is difficult to obtain a good operation feeling (namely, a good brake pedal feeling). Therefore, there is room to further improve the operation feeling of the master cylinder 1 (namely, the brake pedal feeling of the brake system).

The invention has been devised in light of the above-described circumstances, and provides a low cost stroke simulator that is capable of obtaining a further improved operation feeling by suppressing rebound resistance caused by an urging force of a reaction force simulator member.

Further, the invention provides a master cylinder that is capable of obtaining further improved control performance of an output as well as being capable of obtaining a further improved operation feeling.

Furthermore, the invention provides a brake system that is capable of obtaining further improved brake control performance as well as being capable of obtaining a further improved brake pedal feeling.

In order to solve the above-described problems, a stroke simulator according to the invention includes: an input shaft that operates when an input is applied; a simulator operation member that is operated by the input shaft; a reaction force simulator member that is operated by the operation of the simulator operation member, and that outputs to the simulator operation member a reaction force based on the input of the input shaft; and a sliding resistance applying member that applies sliding resistance to the reaction force simulator member when the reaction force simulator member is operated, the sliding resistance changing in accordance with the operation of the reaction force simulator member.

Further, in the stroke simulator according to the invention, the sliding resistance applying member is formed of a rubber body. The reaction force simulator member has a sliding resistance applying member deformation operation portion that presses and deforms the rubber body when the reaction force simulator member is operated.

Further, in the stroke simulator according to the invention, the rubber body is formed in a cylindrical shape. The sliding resistance applying member deformation operation portion comes into contact with an inner peripheral surface of the rubber body and thereby presses and deforms the rubber body when the reaction force simulator member is operated.

Further, in the stroke simulator according to the invention, the rubber body has a predetermined number of protrusions that are provided on the inner peripheral surface having the cylindrical shape. The sliding resistance applying member deformation operation portion comes into contact with the protrusions and thereby presses and deforms the protrusions.

Further, in the stroke simulator according to the invention, the sliding resistance applying member deformation operation portion has an inclined surface that presses and deforms the inner peripheral surface of the rubber body such that a deformation amount of the inner peripheral surface of the rubber body as a result of the pressing becomes larger as the reaction force simulator member moves in an operative direction.

Further, in the stroke simulator according to the invention, the predetermined number of protrusions each have an inclination that is pressed and deformed by the sliding resistance applying member deformation operation portion such that a deformation amount of the predetermined number of protrusions as a result of the pressing becomes larger as the reaction force simulator member moves in an operative direction.

A master cylinder according to the invention includes: a stroke simulator that outputs a reaction force based on an input of an input shaft; and a master cylinder piston that generates a hydraulic pressure based on the input of the input shaft. In the master cylinder, the stroke simulator is one of the stroke simulators according to the invention described above.

A brake system according to the invention includes: a brake pedal; a master cylinder that is operated by depression of the brake pedal and that generates a braking liquid pressure based on the depression of the brake pedal; and a brake cylinder that generates a braking force using the braking liquid pressure generated by the master cylinder. In the braking system, the master cylinder is the master cylinder according to the invention described above.

With the stroke simulator according to the invention that is structured in this manner, when the input shaft performs a stroke, sliding resistance is applied to the reaction force simulator member by the sliding resistance applying member. As a result of this, it is possible to suppress rebound resistance caused by an urging force of the reaction force simulator member. It is therefore possible to obtain a better operation feeling.

Further, since the sliding resistance applying member is disposed to face the operative direction of the reaction force simulator member, the structure of the stroke simulator can be simplified and it is possible to improve ease of assembly of the stroke simulator. In addition, even when the sliding resistance applying member is used, it is possible to suppress an increase in costs by forming the sliding resistance applying member in a relatively simple shape using a rubber body.

Further, with the master cylinder having the stroke simulator according to the invention, in the stroke simulator, sliding resistance is applied to the reaction force simulator member by the sliding resistance applying member as described above. Therefore, it is possible to cause characteristics of the output (the reaction force) with respect to the input of the input shaft in the master cylinder to have hysteresis. As a result of this, it is possible to obtain good control performance of the output of the master cylinder as well as to obtain a good operation feeling. In particular, if the hysteresis is changed such that it continuously increases as the input increases, it is possible to further improve the control performance of the output as well as to further improve the operation feeling.

Further, with the brake system according to the invention, since the master cylinder of the invention is used, it is possible to cause characteristics of the master cylinder hydraulic pressure with respect to the brake pedal depression force of the brake pedal to have hysteresis. As a result of this, it is possible to obtain good control performance of the braking force as well as to obtain a good brake pedal feeling. In particular, if the hysteresis is changed such that it continuously increases as the brake pedal depression force increases, it is possible to easily obtain a braking force in accordance with an operation condition of the brake and to obtain better control performance of the brake. Particularly, it is possible to set the hysteresis to be relatively small in a region in which the brake pedal depression force is relatively small. On the other hand, it is possible to set the hysteresis to be relatively large in a region in which the brake pedal depression force is relatively large. It is therefore possible to further improve the control performance of the brake.

In addition, the hysteresis can be obtained by a simple mechanical structure that includes the sliding resistance applying member deformation operation portion of the reaction force simulator member and the sliding resistance applying member. Therefore, an optimal design to obtain the hysteresis can be easily achieved, and adaptation of the brake system to a different type of vehicle becomes easy, in terms of tuning of software, for example.

Furthermore, since it is possible to suppress a feeling of resistance caused by the urging force of the reaction force simulator member, it is possible to further improve the brake pedal feeling of the brake pedal.

### BRIEF DESCRIPTION OF THE DRAWINGS

FIG. 1 is a diagram that schematically shows a master cylinder having an example of an embodiment of a stroke simulator according to the invention, and a brake system using the master cylinder;
FIG. 2 is a partially enlarged diagram of a portion II shown in FIG. 1;
FIG. 3 (a) is a diagram illustrating part of an operation of the stroke simulator shown in FIG. 1;
FIG. 3(b) is a diagram illustrating another part of the operation of the stroke simulator shown in FIG. 1;
FIG. 4(a) is a diagram showing stroke/output (reaction force) characteristics of a pedal feel simulator portion;
FIG. 4(b) is a diagram showing brake pedal depression force/master cylinder hydraulic pressure characteristics (or master cylinder input/master cylinder hydraulic pressure characteristics) of the brake system;
FIG. 5(a) is a partially enlarged diagram, similar to FIG. 2(a), showing another example of the embodiment of the stroke simulator according to the invention;
FIG. 5 (b) is a diagram showing a reaction force simulator piston sliding resistance applying member when seen in a cross section taken along a line VB-VB shown in FIG. 5(a);
FIG. 6 is a diagram that schematically shows a master cylinder having a known pedal feel simulator portion described in Japanese Patent No. 4510388; and
FIG. 7 is a diagram showing stroke/output (reaction force) characteristics of the known pedal feel simulator portion shown in FIG. 6.

### DETAILED DESCRIPTION OF THE EMBODIMENTS

Hereinafter, an embodiment of the invention will be explained using the drawings.

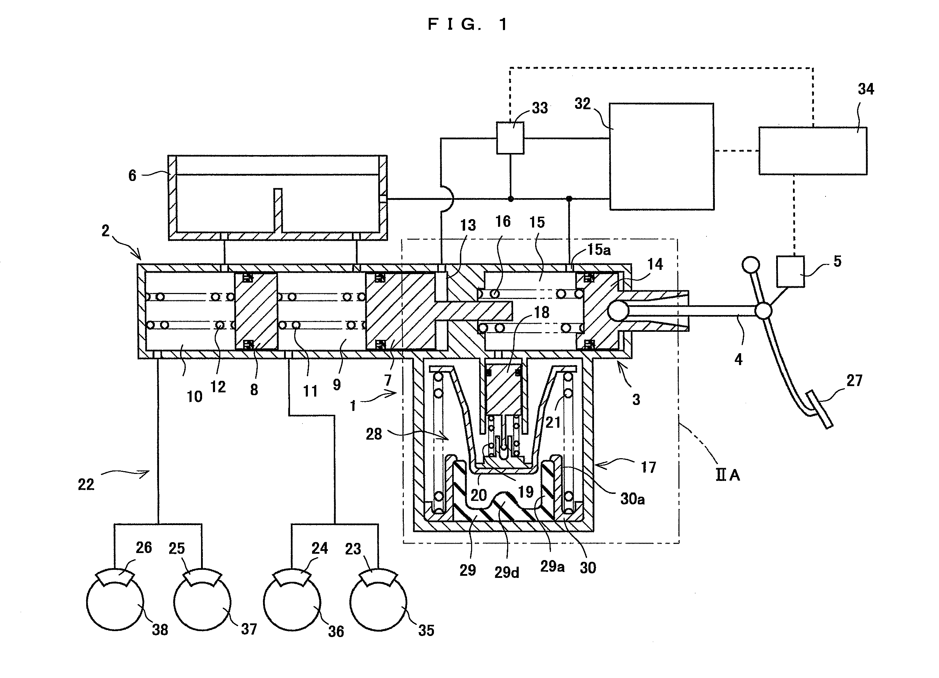

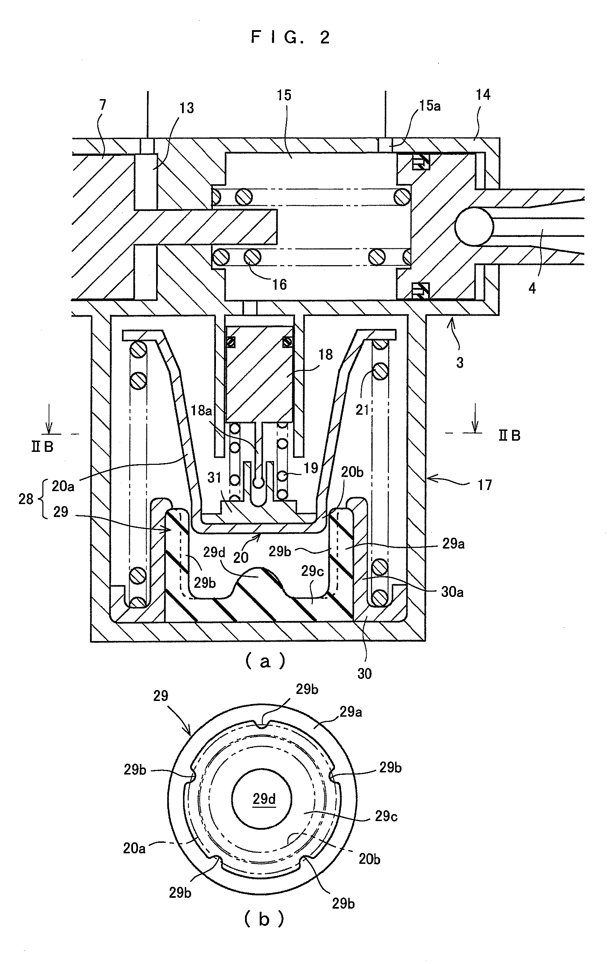

FIG. 1 is a diagram that schematically shows a master cylinder having an example of the embodiment of a stroke simulator according to the invention, and a brake system using the master cylinder. FIG. 2 is a partially enlarged diagram of a portion II shown in FIG. 1. Note that structural elements of the invention that are the same as those of the master cylinder having the stroke simulator shown in FIG. 6 described above are denoted with the same reference numerals and a detailed explanation thereof will be omitted.

As shown in FIG. 1 and FIG. 2, a master cylinder 1 is used for a brake system 22 of this example. In a tandem master cylinder portion 2 of the master cylinder 1, a primary hydraulic chamber 9 is communicatively connected to brake cylinders 23 and 24 of one of brake lines; and a secondary hydraulic chamber 10 is communicatively connected to brake cylinders 25 and 26 of the other of the brake lines.

A brake pedal 27 is connected to an input shaft 4. When a driver depresses the brake pedal 27, the input shaft 4 moves forward.

Further, a pedal feel simulator portion 3, which is a stroke simulator of the master cylinder 1, has a pedal feel simulator cartridge 17, in a similar manner to the known example shown in FIG. 6 described above. The pedal feel simulator cartridge 17 is provided with a reaction force simulator piston sliding resistance portion 28. As shown in FIG. 2(a), the reaction force simulator piston sliding resistance portion 28 includes a reaction force simulator piston sliding resistance applying member 29 (that corresponds to a sliding resistance applying member of the invention), and a sliding resistance applying member deformation operation portion 20a that is provided on a second reaction force simulator piston 20 and that elastically deforms (specifically, viscoelastically deforms) the reaction force simulator piston sliding resistance applying member 29.

The reaction force simulator piston sliding resistance applying member 29 is formed of a rubber body that is a viscoelastic material, such that the reaction force simulator piston sliding resistance applying member 29 has a bottomed cylindrical shape and it can be viscoelastically deformed. The reaction force simulator piston sliding resistance applying member 29 is disposed to face the sliding resistance applying member deformation operation portion 20a of the second reaction force simulator piston 20. The reaction force simulator piston sliding resistance applying member 29 is closely attached and fixed inside a cylindrical portion 30a of a second spring support member 30 that supports one end of a second reaction force simulator spring 21 and that is formed of a rigid body such as metal.

A predetermined number (five in the example shown in the drawings) of protrusions 29b are provided at equal intervals in a circumferential direction on an inner peripheral surface of a cylindrical portion 29a of the reaction force simulator piston sliding resistance applying member 29. The protrusions 29b extend in a longitudinal direction of the cylindrical portion 29a (a movement direction of the second reaction force simulator piston 20, namely, an up-down direction in FIG. 2 (a)). Cross sectional shapes of the protrusions 29b in a direction orthogonal to an extending direction of the protrusions 29b are all the same, and they are a substantially triangular shape and have the same size. A stopper 29d is provided at the center of a bottom portion 29c of the reaction force simulator piston sliding resistance applying member 29. The stopper 29d is a protruding portion having a conical shape whose top portion is formed in a substantially spherical shape. The center of the stopper 29d matches (or substantially matches) the center of the sliding resistance applying member deformation operation portion 20a.

A tip portion 20b (an end portion on the reaction force simulator piston sliding resistance applying member 29 side, namely, a lower end portion in FIG. 2 (a)) of the second reaction force simulator piston 20 is formed in a bottomed cylindrical shape. The sliding resistance applying member deformation operation portion 20a is provided integrally and continuously with the tip portion 20b, on a first reaction force simulator piston 18 side of the tip portion 20b. The sliding resistance applying member deformation operation portion 20a is formed in a cylindrical shape, more specifically, a truncated cone shape. In this case, an outer peripheral surface of the sliding resistance applying member deformation operation portion 20a is an outer peripheral surface having a truncated cone shape that is formed such that the outer peripheral surface on the tip portion 20b side has a diameter that is the same (or substantially the same) as an outer diameter of the tip portion 20b and such that the outer peripheral surface on the first reaction force simulator piston 18 side has a diameter that is larger than the outer diameter of the tip portion 20b. Therefore, the outer peripheral surface of the sliding resistance applying member deformation operation portion 20a is formed as an inclined surface (a tapered surface) that is inclined with respect to a central axis in the longitudinal direction of the second reaction force simulator piston 20. The outer diameter of the outer peripheral surface continuously decreases from the first reaction force simulator piston 18 side toward the reaction force simulator piston sliding resistance applying member 29 side (in an operative direction of the second reaction force simulator piston 20, namely, in a downward direction in FIG. 2(a)).

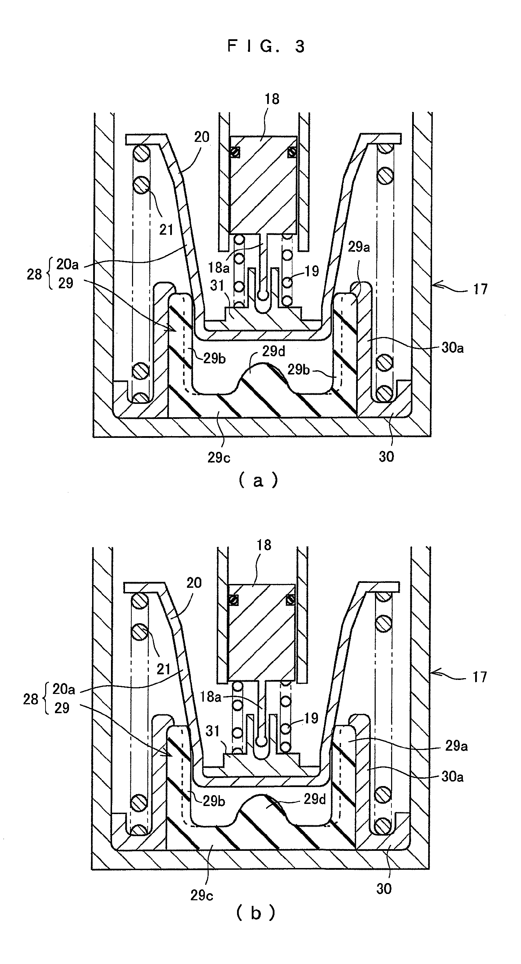

When the master cylinder 1 is not operated (namely, when the pedal feel simulator portion 3 is not operated), a part of the tip portion 20b of the second reaction force simulator piston 20 enters the cylindrical portion 29a of the reaction force simulator piston sliding resistance applying member 29, as shown in FIG. 1 and FIG. 2(a). As a matter of course, without being limited to this example, when the pedal feel simulator portion 3 is not operated, the tip portion 20b can be in a state in which it is ejected from the cylindrical portion 29a of the reaction force simulator piston sliding resistance applying member 29. Then, when the pedal feel simulator portion 3 is operated, if the second reaction force simulator piston 20 moves in its operative direction (in the downward direction in FIG. 2(a)), as shown in FIG. 3(a), the outer peripheral surface of the sliding resistance applying member deformation operation portion 20a comes into contact with top portions 29e (inner peripheral edges), which are the upper ends, in FIG. 3(a), of the protrusions 29b of the reaction force simulator piston sliding resistance applying member 29. After that, when the second reaction force simulator piston 20 moves in the operative direction, since the outer peripheral surface of the sliding resistance applying member deformation operation portion 20a is formed as the inclined surface as described above, the second reaction force simulator piston 20 moves while the outer peripheral surface of the sliding resistance applying member deformation operation portion 20a is pressing and deforming each of the protrusions 29b of the reaction force simulator piston sliding resistance applying member 29, as shown in FIG. 3 (b). At this time, since the outer peripheral surface of the sliding resistance applying member deformation operation portion 20a is formed as the inclined surface as described above, as the second reaction force simulator piston 20 moves in the operative direction, a deformation amount of the top portion 29e, which is the inner peripheral edge of each of the protrusions 29b, increases as a result of the pressing. Further, the cylindrical portion 29a of the reaction force simulator piston sliding resistance applying member 29 is closely attached to and supported by the cylindrical portion 30a of the second spring support member 30 formed of a rigid body. Therefore, the cylindrical portion 29a is suppressed from being bent and deformed laterally. Thus, each of the protrusions 29b is elastically deformed in a stable manner. As a result, sliding resistance due to friction is stably applied from the reaction force simulator piston sliding resistance applying member 29 to the second reaction force simulator piston 20. In this case, an elastic deformation amount of each of the protrusions 29b increases in accordance with the movement of the second reaction force simulator piston 20 in the operative direction. Therefore, the sliding resistance of the reaction force simulator piston sliding resistance applying member 29 also increases. In addition, the sliding resistance changes such that it continuously increases as the second reaction force simulator piston 20 moves in the operative direction.

On the other hand, from the state in which each of the protrusions 29b is elastically deformed and the sliding resistance is applied to the second reaction force simulator piston 20, if the second reaction force simulator piston 20 moves in an opposite direction, namely, in a direction in which it is ejected from the reaction force simulator piston sliding resistance applying member 29, the elastic deformation amount of each of the protrusions 29b decreases and the sliding resistance that is applied by the sliding resistance applying member deformation operation portion 20a to the second reaction force simulator piston 20 decreases. At this time, since the outer peripheral surface of the sliding resistance applying member deformation operation portion 20a is formed as the inclined surface as described above, the sliding resistance that is applied when the second reaction force simulator piston 20 enters the reaction force simulator piston sliding resistance applying member 29 is different from the sliding resistance that is applied when the second reaction force simulator piston 20 is ejected from the reaction force simulator piston sliding resistance applying member 29. More specifically, the above-described sliding resistance that is applied when the second reaction force simulator piston 20 moves in the operative direction is larger than the sliding resistance that is applied when the second reaction force simulator piston 20 moves in an inoperative direction, and hysteresis occurs in the sliding resistance.

In the pedal feel simulator portion 3 that is structured in this manner, when the pedal feel simulator portion 3 is not operated, it is in an inoperative condition shown in FIG. 2 (a). At this time, a simulator hydraulic fluid chamber 15 is communicatively connected to a reservoir tank 6, no hydraulic pressure is generated in the simulator hydraulic fluid chamber 15, and the pressure in the simulator hydraulic fluid chamber 15 is equal to the atmospheric pressure. Further, the first and second reaction force simulator pistons 18 and 20 are respectively in the inoperative positions, which are their highest positions, as shown in FIG. 2(a).

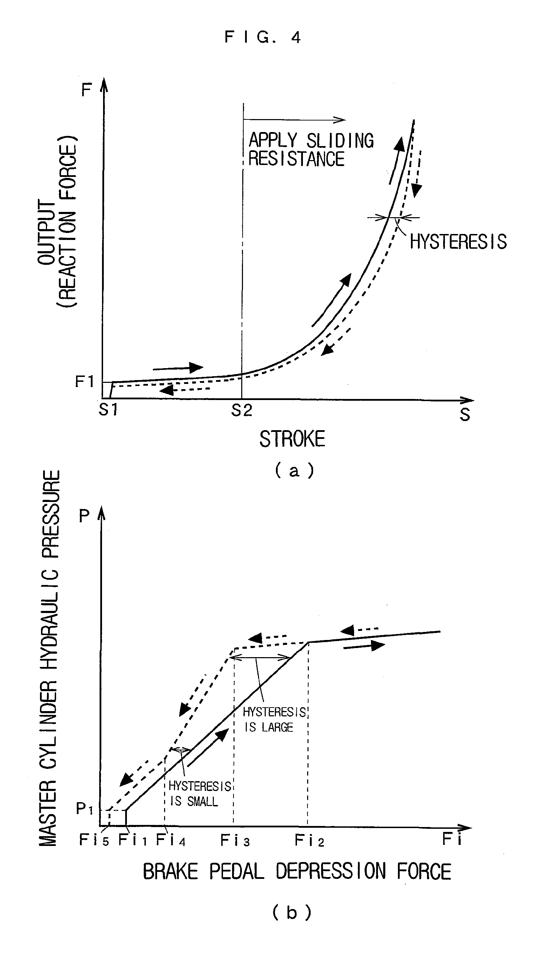

When the input shaft 4 performs a forward stroke, in a similar manner to the above-described known example shown in FIG. 6, the input shaft 4 and a simulator operation piston 14 perform a forward stroke in the forward direction (in the left direction in FIG. 2 (a)) while contracting a simulator operation piston return spring 16. When a seal member 14a of the simulator operation piston 14 passes through a communication hole 15a of the reservoir tank 6, the simulator hydraulic fluid chamber 15 is disconnected from the reservoir tank 6. When the simulator operation piston 14 further performs a forward stroke and any looseness of each of the structural members of the pedal feel simulator portion 3 disappears, hydraulic pressure is generated in the simulator hydraulic fluid chamber 15. Also in the simulator hydraulic fluid chamber 15, the hydraulic pressure is applied to the simulator operation piston 14, and the simulator operation piston 14 transmits to the input shaft 4 an output corresponding to the stroke at that time, as a reaction force. Thus, as shown in FIG. 4(a), the pedal feel simulator portion 3 generates an output (a reaction force) F₁ corresponding to a stroke S₁ of the input shaft 4 at that time.

After that, the hydraulic pressure generated in the simulator hydraulic fluid chamber 15 increases along with a further forward stroke of the input shaft 4. Then, the hydraulic pressure in the simulator hydraulic fluid chamber 15 is applied to the first reaction force simulator piston 18. Therefore, the first reaction force simulator piston 18 moves in the operative direction (in the downward direction in FIG. 2 (a)) while contracting a first reaction force simulator spring 19. Further, since an urging force of the first reaction force simulator spring 19 is applied to the second reaction force simulator piston 20, the second reaction force simulator piston 20 moves in the operative direction (in the downward direction in FIG. 2(a)) while contracting the second reaction force simulator spring 21. At this time, an output (a reaction force) F of the pedal feel simulator portion 3 slightly increases, substantially linearly with respect to an increase in a stroke S of the input shaft 4 as shown in FIG. 4(a).

When the input shaft 4 further performs a forward stroke and the stroke S of the input shaft 4 reaches a stroke S₂, the sliding resistance applying member deformation operation portion 20a of the second reaction force simulator piston 20 comes into contact with the protrusions 29b of the reaction force simulator piston sliding resistance applying member 29, as described above. After that, if the second reaction force simulator piston 20 moves in the operative direction, sliding resistance is applied to the second reaction force simulator piston 20 by the reaction force simulator piston sliding resistance applying member 29. The sliding resistance increases in accordance with the movement of the second reaction force simulator piston 20 in the operative direction. Then, due to the sliding resistance of the reaction force simulator piston sliding resistance applying member 29, the hydraulic pressure in the simulator hydraulic fluid chamber 15 increases, substantially as a quadratic curve, with respect to the forward stroke of the input shaft 4. Therefore, as shown in FIG. 4 (a), the output F of the pedal feel simulator portion 3 also increases, substantially as a quadratic curve, with respect to an increase in the stroke S of the input shaft 4.

Note that, as shown in FIG. 4 (a), the pedal feel simulator portion 3 has hysteresis on a stroke increasing side shown by a solid line and on a stroke decreasing side shown by a dotted line, in stroke/output (reaction force) characteristics.

As shown in FIG. 1, the brake system 22 of this example is further provided with a power source 32, an electromagnetic switch valve 33 and a control portion (ECU) 34. The power source 32 supplies hydraulic fluid to a power chamber 13. The electromagnetic switch valve 33 selectively switches and communicatively connects the power chamber 13 to one of the reservoir tank 6 and the power source 32. In this case, during an inoperative time period of the brake system 22 in which the brake pedal 27 is not depressed, the electromagnetic switch valve 33 does not operate, disconnects the power chamber 13 from the power source 32, and communicatively connects the power chamber 13 to the reservoir tank 6. On the other hand, during an operative time period of the brake system 22 in which the brake pedal 27 is depressed, the electromagnetic switch valve 33 operates, disconnects the power chamber 13 from the reservoir tank 6, and communicatively connects the power chamber 13 to the power source 32.

When the brake pedal 27 is depressed, the ECU 34 drives the power source 32 in response to a detection signal of the stroke of the input shaft 4 supplied from the stroke sensor 5. At the same time, the ECU 34 switches and operates the electromagnetic switch valve 33. As a result of this, the power chamber 13 is disconnected from the reservoir tank 6 and the hydraulic fluid is supplied from the power source 32 to the power chamber 13. In this case, based on the stroke of the input shaft 4 (namely, the depression stroke of the brake pedal 27), the ECU 34 calculates a hydraulic pressure corresponding to the braking force by the friction brake, in a similar manner to that described above, and the hydraulic pressure of the power chamber 13 is controlled to become the calculated hydraulic pressure. The primary piston 7 is operated by the hydraulic pressure of the power chamber 13, and a master cylinder hydraulic pressure (namely, a braking liquid pressure) based on the depression amount of the brake pedal 27 is generated in the primary hydraulic chamber 9. At the same time, the secondary piston 8 operates and a master cylinder hydraulic pressure (namely, a braking liquid pressure) based on the depression amount of the brake pedal 27 is generated in the secondary hydraulic chamber 10.

Further, when the brake pedal 27 is released, the ECU 34 stops the power source 32 in response to a detection signal of the stroke of the input shaft 4 supplied from the stroke sensor 5. At the same time, the ECU 34 switches and operates the electromagnetic switch valve 33. As a result of this, the power chamber 13 is disconnected from the power source 32, the power chamber 13 is communicatively connected to the reservoir tank 6, and the hydraulic fluid in the power chamber 13 is discharged to the reservoir tank 6. As a result, the primary piston 7 and the secondary piston 8 are both in the inoperative positions shown in FIG. 1, the primary hydraulic chamber 9 and the secondary hydraulic chamber 10 are both communicatively connected to the reservoir tank 6, and the hydraulic pressure in the primary hydraulic chamber 9 and the hydraulic pressure in the secondary hydraulic chamber 10 become equal to the atmospheric pressure.

In the brake system 22 of this example that is structured in this manner, during the inoperative time period in which the brake pedal 27 is not depressed, the master cylinder 1 is in the inoperative condition shown in FIG. 1 and FIG. 2(a). At this time, the pressure in the simulator hydraulic fluid chamber 15 is equal to the atmospheric pressure as described above, and the first and second reaction force simulator pistons 18 and 20 are respectively in the inoperative positions, which are their highest positions, as shown in FIG. 2(a). Further, the primary hydraulic chamber 9, the secondary hydraulic chamber 10 and the power chamber 13 of the tandem master cylinder portion 2 are all communicatively connected to the reservoir tank 6. The hydraulic pressure is not generated in the primary hydraulic chamber 9, the secondary hydraulic chamber 10 and the power chamber 13, and the pressure in these chambers is equal to the atmospheric pressure.

When the brake pedal 27 is depressed in the inoperative condition, an input corresponding to the depression force of the brake pedal 27 is applied to the input shaft 4. Due to this, the input shaft 4 performs a forward stroke and the simulator operation piston 14 performs a forward stroke as described above. Further, the stroke of the input shaft 4 is detected by the stroke sensor 5. As described above, the ECU 34 drives the power source 32 based on the stroke of the input shaft 4 (namely, the depression stroke of the brake pedal 27) detected by the stroke sensor 5. At the same time, the ECU 34 switches the electromagnetic switch valve 33, disconnects the power chamber 13 from the reservoir tank 6, and connects the power chamber 13 to the power source 32. As a result of this, the hydraulic fluid is supplied from the power source 32 to the power chamber 13, and the primary piston 7 and the secondary piston 8 move forward. In response to this, the primary hydraulic chamber 9 and the secondary hydraulic chamber 10 are both disconnected from the reservoir tank 6, and the hydraulic fluid in the primary hydraulic chamber 9 and the hydraulic fluid in the secondary hydraulic chamber 10 are respectively supplied to the corresponding brake cylinders 23, 24, 25 and 26 of the two brake lines. At this time, losses, such as invalid strokes of the brake cylinders 23, 24, 25 and 26 exist in the brake system 22. Therefore, the tandem master cylinder portion 2 does not yet generate a master cylinder hydraulic pressure.

When the brake pedal depression force reaches Fi₁, the losses in the brake system 22 disappear and the tandem master cylinder portion 2 generates a master cylinder hydraulic pressure P₁ as shown in FIG. 4(b). After that, as shown by a solid line in FIG. 4(b), a master cylinder hydraulic pressure P increases linearly as a brake pedal depression force Fi increases. In this case, since the ECU 34 causes the hydraulic pressure corresponding to the stroke detection signal from the stroke sensor 5 to be fed to the power chamber 13, the master cylinder hydraulic pressure P is generated corresponding to the depression stroke of the brake pedal 27. These braking liquid pressures are respectively supplied to the corresponding brake cylinders 23, 24, 25 and 26, and braking is applied to wheels 35, 36, 37 and 38.

When the brake pedal depression force reaches Fi₂, a rod 18a of the first reaction force simulator piston 18 comes into contact with a first spring support member 31 that supports one end of the first reaction force simulator spring 19, and the second reaction force simulator spring 21 comes into contact with the stopper 29d of the reaction force simulator piston sliding resistance applying member 29. After that, the first and second reaction force simulator pistons 18 and 20 do not substantially move. Therefore, the pedal feel simulator cartridge 17 does not substantially exert the pedal feel simulator function. As shown in FIG. 4(b), an output (a reaction force) Fo of the pedal feel simulator portion 3 does not increase at a first ratio, and the output Fₒ starts to increase substantially linearly by an amount corresponding to an increase in the input Fi of the input shaft 4.

In this manner, if the brake pedal depression force Fi is decreased in a state in which the pedal feel simulator cartridge 17 does not substantially exert the pedal feel simulator function, the input shaft 4 and the simulator operation piston 14 perform a backward stroke due to the urging force of the simulator operation piston return spring 16. While the pedal feel simulator cartridge 17 is not exerting the pedal feel simulator function, namely, while the first and second reaction force simulator pistons 18 and 20 do not move due to the hysteresis of the sliding resistance that is applied by the above-described reaction force simulator piston sliding resistance applying member 29 to the second reaction force simulator piston 20, the master cylinder hydraulic pressure P decreases substantially linearly by an amount corresponding to a decrease amount of the brake pedal depression force, as shown in FIG. 4(b).

Even if the brake pedal depression force Fi decreases to the above-described force Fi₂, the first and second reaction force simulator pistons 18 and 20 still do not move due to the hysteresis of the sliding resistance that is applied by the above-described reaction force simulator piston sliding resistance applying member 29 to the second reaction force simulator piston 20, and the pedal feel simulator cartridge 17 does not exert the pedal feel simulator function. Therefore, the master cylinder hydraulic pressure P does not decrease at the above-described first, ratio with respect to a decrease in the brake pedal depression force Fi, and the master cylinder hydraulic pressure P continues to decrease substantially linearly by an amount corresponding to a decrease amount of the brake pedal depression force Fi in a state in which the pedal feel simulator function is not substantially exerted, as shown by dotted lines in FIG. 4(b).

If the brake pedal depression force Fi decreases to a force Fi₃ that is less than the force Fi₂, after that, the second reaction force simulator piston 20 moves in the inoperative direction (in an upward direction in FIG. 2(a)) due to the hysteresis of the sliding resistance by the reaction force simulator piston sliding resistance applying member 29. More specifically, the pedal feel simulator cartridge 17 exerts the pedal feel simulator function and the master cylinder hydraulic pressure P decreases significantly at a predetermined second ratio with respect to a decrease in the brake pedal depression force Fi, as shown by the dotted lines in FIG. 4(b). At this time, the predetermined second ratio is larger than the above-described first ratio due to the hysteresis of the sliding resistance by the reaction force simulator piston sliding resistance applying member 29. Accordingly, the input/output characteristics of the pedal feel simulator portion 3 have hysteresis. The hysteresis continuously changes, such that the hysteresis is large when the input Fi of the pedal feel simulator portion 3 is relatively large, and such that it becomes smaller, when the input Fi of the pedal feel simulator portion 3 is relatively small.

If the brake pedal depression force Fi decreases to a force Fi₄ that is less than the force Fi₂ and larger than the force Fi₁, after that, the sliding resistance applying member deformation operation portion 20a of the second reaction force simulator piston 20 separates from each of the protrusions 29b of the reaction force simulator piston sliding resistance applying member 29. As a result of this, the sliding resistance is not applied to the second reaction force simulator piston 20 by the reaction force simulator piston sliding resistance applying member 29. Accordingly, as shown by the dotted lines in FIG. 4(b), the master cylinder hydraulic pressure P decreases at the above-described first ratio with respect to a decrease in the brake pedal depression force Fi. Then, if the brake pedal depression force Fi decreases to a force Fi₅ that is less than the force Fi₄, the master cylinder hydraulic pressure P becomes equal to the hydraulic pressure P₁. After that, if the brake pedal depression force Fi decreases to be less than the force Fi₅, the master cylinder hydraulic pressure P becomes equal to 0. Accordingly, the braking of the wheels 35, 36, 37 and 38 is released.

In this manner, the master cylinder 1 of this example has brake pedal depression force/master cylinder hydraulic pressure characteristics that have hysteresis on the brake pedal depression force increasing side shown by the solid line in FIG. 4 (b) and on the brake pedal force decreasing side shown by the dotted lines in FIG. 4 (b). In this case, the hysteresis continuously changes corresponding to the input in a region between the force Fi₃ and the force Fi₄.

Other structures and other operations of the master cylinder 1 and the pedal feel simulator portion 3 of this example are the same as those of the master cylinder 1 and the pedal feel simulator portion 3 shown in FIG. 6 described above (namely, the master cylinder having the pedal feel simulator described in Japanese Patent No. 4510388). Further, other structures and other operations of the brake system including members from the tandem master cylinder portion 2 to the brake cylinders 23, 24, 25 and 26 are the same as those of the known general brake system including members from the tandem master cylinder to the brake cylinders.

With the pedal feel simulator portion 3 of this example, when the second reaction force simulator piston 20 moves in the operative direction and the inoperative direction due to the stroke of the input shaft 4, if the stroke of the input shaft 4 exceeds a predetermined amount, sliding resistance is applied to the second reaction force simulator piston 20 by the reaction force simulator piston sliding resistance applying member 29 of the reaction force simulator piston sliding resistance portion 28. Thus, it is possible to suppress rebound resistance caused by spring forces of the first and second reaction force simulator springs 19 and 21. It is therefore possible to obtain a good operation feeling of the input shaft 4.

Further, the reaction force simulator piston sliding resistance applying member 29 is disposed inside the cylindrical portion 30a of the second spring support member 30 that supports one end of the second reaction force simulator spring 21, such that the reaction force simulator piston sliding resistance applying member 29 faces the operative direction of the second reaction force simulator piston 20. Therefore, the structure of the pedal feel simulator cartridge 17 can be simplified and it is possible to improve ease of assembly of the reaction force simulator piston sliding resistance applying member 29. Moreover, the reaction force simulator piston sliding resistance applying member 29 is formed in a relatively simple shape using a low-cost rubber body. Therefore, even when the reaction force simulator piston sliding resistance applying member 29 is used, it is possible to suppress an increase in costs.

Meanwhile, with the master cylinder 1 having the pedal feel simulator portion 3 of this example, sliding resistance is applied to the second reaction force simulator piston 20 by the reaction force simulator piston sliding resistance applying member 29 in the pedal feel simulator portion 3 as described above. It is therefore possible to cause the characteristics of the master cylinder hydraulic pressure with respect to the input of the input shaft 4 in the master cylinder 1 to have hysteresis. Thus, it is possible to obtain good control performance of the output of the master cylinder 1 as well as to obtain a good operation feeling. In particular, if the hysteresis is changed such that it continuously increases as the input increases, it is possible to further improve the control performance of the output as well as to further improve the operation feeling.

With the brake system 22 of this example, since it uses the master cylinder 1 of this example, it is possible to cause the characteristics of the master cylinder hydraulic pressure with respect to the brake pedal depression force Fi of the brake pedal 27 to have hysteresis. Thus, it is possible to obtain good control performance of the braking force as well as to obtain a good brake pedal feeling. In particular, if the hysteresis is changed such that it continuously increases as the brake pedal depression force Fi increases, it is possible to easily obtain a braking force in accordance with an operation condition of the brake and to obtain better control performance of the brake. In this case, in a region in which the brake pedal depression force of the brake pedal 27 is relatively small, it is possible to further improve the control performance of the brake by setting the hysteresis to be relatively small.

In addition, the hysteresis can be obtained by a mechanical structure, namely, the reaction force simulator piston sliding resistance portion 28. Therefore, an optimal design of the hysteresis can be performed easily, and adaptation of the brake system 22 to a different type of vehicle becomes easy, in terms of tuning of software, for example.

Moreover, since it is possible to suppress the resistance caused by spring forces of the first and second reaction force simulator springs 19 and 21, it is possible to further improve the brake pedal feeling of the brake pedal 27.

Other advantageous effects of the master cylinder 1 and the pedal feel simulator portion 3 of this example are the same as those of the master cylinder 1 and the pedal feel simulator portion 3 shown in FIG. 6 described above (namely, the master cylinder having the pedal feel simulator described in Japanese Patent No. 4510388). Further, other advantageous effects of the brake system 22 of this example are the same as those of the known general brake system using the tandem master cylinder.

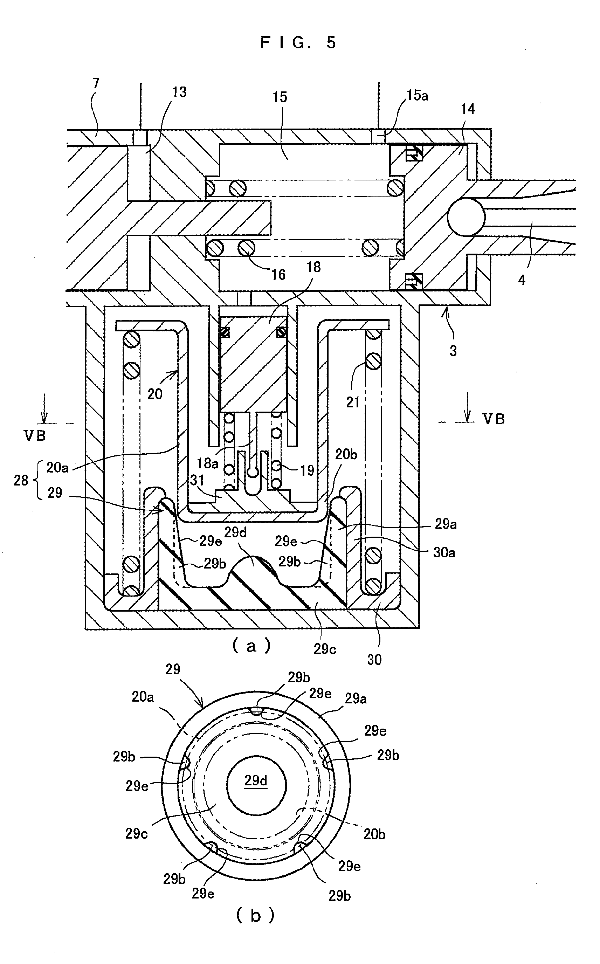

FIG. 5(a) is a partially enlarged diagram, similar to FIG. 2(a), showing another example of the embodiment of the stroke simulator according to the invention. FIG. 5(b) is a diagram showing the reaction force simulator piston sliding resistance applying member 29 when seen in a cross section taken along a line VB-VB shown in FIG. 5(a).

In the above-described example, the outer peripheral surface of the sliding resistance applying member deformation operation portion 20a of the second reaction force simulator piston 20 is formed as an inclined surface. However, as shown in FIG. 5(a), in the pedal feel simulator portion 3 of this example, the top portion 29e of each of the protrusions 29b of the reaction force simulator piston sliding resistance applying member 29 has a substantially triangular-shaped cross section in a direction orthogonal to the longitudinal direction of the cylindrical portion 29a. Each of the protrusions 29b is inclined such that the top portion 29e is closer to a central axis line of the cylindrical portion 29a in accordance with movement of the second reaction force simulator piston 20 in the operative direction. More specifically, the inclination of each of the protrusions 29b is designed such that a diameter of a virtual circle that contacts the top portion 29e of each of the protrusions 29b in a plane in a direction orthogonal to the central axis line of the cylindrical portion 29a becomes smaller in accordance with the movement of the second reaction force simulator piston 20 in the operative direction. On the other hand, the sliding resistance applying member deformation operation portion 20a of the second reaction force simulator piston 20 is formed in a cylindrical shape such that its outer peripheral surface has a constant outer diameter that is the same as an outer diameter of an outer peripheral surface of the tip portion 20b.

In the pedal feel simulator portion 3 of this example that is structured in this manner, when the second reaction force simulator piston 20 moves in the operative direction, the tip portion 20b comes into contact with each of the protrusions 29b. After that, in accordance with the movement of the second reaction force simulator piston 20 in the operative direction, the tip portion 20b and the sliding resistance applying member deformation operation portion 20a viscoelastically deform each of the protrusions 29b. As a result of this, sliding resistance is applied to the second reaction force simulator piston 20 from each of the protrusions 29b of the reaction force simulator piston sliding resistance applying member 29. In a similar manner to the above-described example, the sliding resistance increases in accordance with movement of the second reaction force simulator piston 20 in the operative direction, and decreases in accordance with movement of the second reaction force simulator piston 20 in the inoperative direction.

Other structures and other operational effects of the pedal feel simulator portion 3 of this example are the same as those of the above-described example. Structures and operational effects of the master cylinder 1 and the brake system 22 of this example are also the same as those of the above-described example.

Note that the invention is not limited to each of the above-described examples and various design changes are possible. For example, in each of the above-described examples, the protrusions 29b are provided on the reaction force simulator piston sliding resistance applying member 29. However, it is also possible that a predetermined number of protrusions are provided on the sliding resistance applying member deformation operation portion 20a of the second reaction force simulator piston 20, and the cylindrical portion 29a of the reaction force simulator piston sliding resistance applying member 29 is viscoelastically deformed by these protrusions. Further, the protrusions need not necessarily be provided and they can be omitted. In this case, the outer peripheral surface of the sliding resistance applying member deformation operation portion 20a of the second reaction force simulator piston 20 may be formed as an inclined surface similar to that described above, or the inner peripheral surface of the cylindrical portion 29a of the reaction force simulator piston sliding resistance applying member 29 may be formed as an inclined surface similar to that described above. However, it is preferable to provide protrusions in order to inhibit the sliding resistance from being excessively large, and in order to obtain an appropriate sliding resistance by appropriately setting the size of a sliding contact portion of each of the protrusions that slidingly contacts the second reaction force simulator piston 20.

Moreover, the invention can be applied to any type of stroke simulator as long as it can apply sliding resistance to the second reaction force simulator piston 20. In summary, the invention can be changed in design in various ways within the scope of the claims.

The stroke simulator, the master cylinder and the brake system according to the invention can suitably be used, respectively, for a stroke simulator that generates a reaction force that is simulated corresponding to pedal depression, a master cylinder having this stroke simulator, and a brake system using this master cylinder.

## Claims

1. A stroke simulator (3) **characterized by**:
an input shaft (4) that operates when an input is applied;
a simulator operation member (14) that is operated by the input shaft (4);
a reaction force simulator member (18) that is operated by the operation of the simulator operation member (14), and that outputs to the simulator operation member (14) a reaction force based on the input of the input shaft (4); and
a sliding resistance applying member (29) that applies sliding resistance to the reaction force simulator member (18) when the reaction force simulator member (18) is operated, the sliding resistance changing in accordance with the operation of the reaction force simulator member (18).

2. The stroke simulator (3) according to claim 1, wherein
the sliding resistance applying member (29) is formed of a rubber body, and
the reaction force simulator member (18) has a sliding resistance applying member deformation operation portion (20a) that presses and deforms the rubber body when the reaction force simulator member (18) is operated.

3. The stroke simulator (3) according to claim 2, wherein
the rubber body is formed in a cylindrical shape, and
the sliding resistance applying member deformation operation portion (20a) comes into contact with an inner peripheral surface (29a) of the rubber body and thereby presses and deforms the rubber body when the reaction force simulator member (18) is operated.

4. The stroke simulator (3) according to claim 3, wherein
the rubber body has a predetermined number of protrusions (29b) that are provided on the inner peripheral surface having the cylindrical shape, and
the sliding resistance applying member (29) deformation operation portion comes into contact with the protrusions (29b) and thereby presses and deforms the protrusions (29b).

5. The stroke simulator (3) according to claim 3 or 4, wherein
the sliding resistance applying member deformation operation portion (20a) has an inclined surface that presses and deforms the inner peripheral surface (29a) of the rubber body such that a deformation amount of the inner peripheral surface (29a) of the rubber body as a result of the pressing becomes larger as the reaction force simulator member (18) moves in an operative direction.

6. The stroke simulator (3) according to claim 4, wherein
the predetermined number of protrusions (29b) each have an inclination that is pressed and deformed by the sliding resistance applying member deformation operation portion (20a) such that a deformation amount of the predetermined number of protrusions (29b) as a result of the pressing becomes larger as the reaction force simulator member (18) moves in an operative direction.

7. A master cylinder (1) comprising:
a stroke simulator (3) that outputs a reaction force based on an input of an input shaft (4); and
a master cylinder piston that generates a hydraulic pressure based on the input of the input shaft (4);
**characterized by**
the stroke simulator (3) is the stroke simulator (3) according to any one of claims 1 to 6.

8. A brake system (22) comprising:
a brake pedal (27);
a master cylinder (1) that is operated by depression of the brake pedal (27) and that generates a braking liquid pressure based on the depression of the brake pedal (27); and
a brake cylinder (23, 24, 25, 26) that generates a braking force using the braking liquid pressure generated by the master cylinder (1);
**characterized by**
the master cylinder (1) is the master cylinder (1) according to claim 7.

## Patentansprüche

1. Hubsimulator (3), **gekennzeichnet durch**:
eine Eingangswelle (4), die arbeitet, wenn Eingangsleistung eingegeben wird;
ein Simulatoroperationselement (14), das **durch** die Eingangswelle (4) betrieben wird;
ein Gegenkraft-Simulatorelement (18), das **durch** den Betrieb des Simulatoroperationselements (14) betrieben wird und anhand des Eingangs in die Eingangswelle (4) an das Simulatoroperationselement (14) eine Gegenkraft ausgibt; und
ein Gleitwiderstandausübungselement (29), das auf das Gegenkraft-Simulatorelement (18) einen Gleitwiderstand ausübt, wenn das Gegenkraft-Simulatorelement (18) betrieben wird, wobei sich der Gleitwiderstand entsprechend dem Betrieb des Gegenkraft-Simulatorelements (18) ändert.

2. Hubsimulator (3) nach Anspruch 1, wobei
das Gleitwiderstandausübungselement (29) aus einem Gummikörper gebildet ist und
das Gegenkraft-Simulatorelement (18) einen Gleitwiderstandausübungselement-Verformungsbetriebsabschnitt (20a) besitzt, der den Gummikörper presst und verformt, wenn das Gegenkraft-Simulatorelement (18) betrieben wird.

3. Hubsimulator (3) nach Anspruch 2, wobei
der Gummikörper eine zylindrische Form hat und
der Gleitwiderstandausübungselement-Verformungsbetriebsabschnitt (20a) mit einer inneren Umfangsoberfläche (29a) des Gummikörpers in Kontakt gelangt und dadurch den Gummikörper presst und verformt, wenn das Gegenkraft-Simulatorelement (18) betrieben wird.

4. Hubsimulator (3) nach Anspruch 3, wobei
der Gummikörper eine vorgegebene Anzahl von Vorsprüngen (29b) besitzt, die an der inneren Umfangsoberfläche mit zylindrischer Form vorgesehen sind, und
der Gleitwiderstandausübungselement-Verformungsbetriebsabschnitt (29) mit den Vorsprüngen (29b) in Kontakt gelangt und dadurch die Vorsprünge (29b) presst und verformt.

5. Hubsimulator (3) nach Anspruch 3 oder 4, wobei
der Gleitwiderstandausübungselement-Verformungsbetriebsabschnitt (20a) eine geneigte Oberfläche besitzt, die die innere Umfangsoberfläche (29a) des Gummikörpers presst und verformt, derart, dass ein Verformungsbetrag der inneren Umfangsoberfläche (29a) des Gummikörpers als Folge des Pressens zunimmt, wenn sich das Gegenkraft-Simulatorelement (18) in einer Betriebsrichtung bewegt.

6. Hubsimulator (3) nach Anspruch 4, wobei
die vorgegebene Anzahl von Vorsprüngen (29b) jeweils eine geneigte Fläche besitzen, die durch den Gleitwiderstandausübungselement-Verformungsbetriebsabschnitt (20a) gepresst und verformt wird, derart, dass ein Verformungsbetrag der vorgegebenen Anzahl von Vorsprüngen (29b) als Folge des Pressens zunimmt, wenn sich das Gegenkraft-Simulatorelement (18) in einer Betriebsrichtung bewegt.

7. Hauptbremszylinder (1), der Folgendes umfasst:
einen Hubsimulator (3), der anhand eines Eingangs in die Eingangswelle (4) eine Gegenkraft ausgibt; und
einen Hauptbremszylinder-Kolben, der anhand des Eingangs in die Eingangswelle (4) einen Hydraulikdruck erzeugt;
**dadurch gekennzeichnet, dass**
der Hubsimulator (3) der Hubsimulator (3) nach einem der Ansprüche 1 bis 6 ist.

8. Bremssystem (22), das umfasst:
ein Bremspedal (27);
einen Hauptbremszylinder (1), der durch Niederdrücken des Bremspedals (27) betrieben wird und der einen Bremsflüssigkeitsdruck anhand des Niederdrückens des Bremspedals (27) erzeugt; und
einen Bremszylinder (23, 24, 25, 26), der eine Bremskraft unter Verwendung des durch den Hauptbremszylinder (1) erzeugten Bremsflüssigkeitsdrucks erzeugt;
**dadurch gekennzeichnet, dass**
der Hauptbremszylinder (1) der Hauptbremszylinder (1) nach Anspruch 7 ist.

## Revendications

1. Simulateur de course (3), **caractérisé par**:
un arbre d'entrée (4) qui est actif lorsqu'une entrée lui est appliquée;
un élément d'actionnement de simulateur (14) qui est actionné par l'arbre d'entrée (4);
un élément simulateur de force de réaction (18) qui est actionné par l'actionnement de l'élément d'actionnement de simulateur (14) et qui fournit en sortie à l'élément d'actionnement de simulateur (14) une force de réaction basée sur l'entrée de l'arbre d'entrée (4); et
un élément d'application d'une résistance au glissement (29) qui applique une résistance au glissement à l'élément simulateur de force de réaction (18) lorsque l'élément simulateur de force de réaction (18) est actionné, la résistance au glissement variant selon l'actionnement de l'élément simulateur de force de réaction (18).

2. Simulateur de course (3) conforme à la revendication 1, dans lequel:
l'élément (29) appliquant une résistance au glissement est constitué d'un corps en caoutchouc, et
l'élément simulateur de force de réaction (18) a une partie (20a) d'actionnement de déformation de l'élément appliquant une résistance au glissement qui comprime et déforme le corps en caoutchouc lorsque l'élément simulateur de force de réaction (18) est actionné.

3. Simulateur de course (3) conforme à la revendication 2, dans lequel:
le corps en caoutchouc a une forme cylindrique, et
la partie d'actionnement de déformation (20a) de l'élément appliquant une résistance au glissement vient en contact avec une surface périphérique interne (29a) du corps en caoutchouc et comprime et déforme ainsi le corps élastique lorsque l'élément simulateur de force de réaction (18) est actionné.

4. Simulateur de course (3) conforme à la revendication 3, dans lequel:
le corps en caoutchouc comprend un nombre prédéfini de saillies (29b) qui sont situées sur la surface périphérique interne de forme cylindrique, et
la partie d'actionnement de déformation de l'élément appliquant une résistance au glissement (29) vient en contact avec les saillies (29b) et comprime et déforme ainsi ces saillies (29b).

5. Simulateur de course (3) conforme à la revendication 3 ou 4, dans lequel:
la partie d'actionnement de déformation (20a) de l'élément appliquant une résistance au glissement a une surface inclinée qui comprime et déforme la surface périphérique interne (29a) du corps en caoutchouc de sorte que l'étendue de la déformation de la surface périphérique interne (29a) du corps en caoutchouc résultant de la compression augmente lorsque l'élément simulateur de force de réaction (18) se déplace dans la direction d'actionnement.

6. Simulateur de course (3) conforme à la revendication 4, dans lequel:
parmi le nombre prédéfini de saillies (29b) chacune des saillies a une pente qui est comprimée et déformée par la partie d'actionnement de déformation (20a) de l'élément appliquant une résistance au glissement de sorte que l'étendue de la déformation du nombre prédéfini de saillies (29b) résultant de la compression augmente lorsque l'élément simulateur de force de réaction (18) se déplace dans la direction d'actionnement.

7. Maître-cylindre (1) comprenant:
un simulateur de course (3) qui fournit en sortie une force de réaction basée sur une entrée d'un arbre d'entrée (4); et
un piston de maître-cylindre qui génère une pression hydraulique basée sur l'entrée de l'arbre d'entrée (4);
**caractérisé en ce que**
le simulateur de course (3) est un simulateur de course (3) conforme à l'une quelconque des revendications 1 à 6.

8. Système de frein (22) comprenant:
une pédale de frein (27);
un maître-cylindre (1) qui est actionné par la dépression de la pédale de frein (27) et qui génère une pression de liquide de freinage basée sur la dépression de la pédale de frein (27); et
un cylindre de frein (23, 24, 25, 26) qui génère une force de freinage utilisant la pression du liquide de freinage générée par le maître-cylindre (1),
**caractérisé en ce que**
le maître-cylindre (1) est un maître-cylindre (1) conforme à la revendication 7.
